# EUROPEAN PATENT APPLICATION

(11) **EP 4 653 718 A1**
(43) Date of publication of application: **26.11.2025**
(21) Application number: 23928520.8
(22) Date of filing: 17.03.2023
(51) Int. Cl.: F16D 13/58

(54) **CLUTCH ACTUATOR FASTENING STRUCTURE**

(71) Applicant: HONDA MOTOR CO., LTD., Tokyo 105-8404 (JP)
(72) Inventor: ONO, Junya, Tokyo 107-8556 (JP); NAITO, Masazumi, Tokyo 107-8556 (JP); SAITO, Hitoshi, Tokyo 107-8556 (JP); TOKITO, Akira, Tokyo 107-8556 (JP); GOTO, Takafumi, Tokyo 107-8556 (JP)
(74) Representative: Kiwit, Benedikt
(86) International application number: PCT/JP2023/010641
(87) International publication number: WO 2024/194935

(57) **Abstract**

A fastening structure of a clutch actuator includes: a clutch device (40); a clutch cover (30) which covers the clutch device (40); and a clutch actuator (60) which outputs driving force for actuating the clutch device (40). The clutch actuator (60) includes: an electric motor (61); a release shaft (53) which extends in a first axial direction, and which receives an input from the electric motor (61), and then rotates; a gear (63) which decelerates rotational power output from the electric motor (61), and transmits the rotational power to the release shaft (53); and a case (71) which accommodates the electric motor (61) and the gear (63), and which supports the release shaft (53) to be rotatable. The clutch cover (30) and the case (71) include: a support shaft portion (90) which is provided to be coaxial with the release shaft (53), and which mutually supports; and a fastening portions (96, 97) which mutually fastens in a direction orthogonal to the first axial direction.

## Description

### TECHNICAL FIELD

The present invention relates to a fastening structure of a clutch actuator.

### BACKGROUND ART

A clutch control device has been conventionally known, including a clutch actuator that outputs driving force for actuating a clutch device, and automatically performing a connection and disconnection operation of the clutch device with electric control (see, for example, Patent Document 1). Patent Document 1 discloses a constitution in which a clutch actuator motor, which is a driving force source of a switching operation for connecting and disconnecting the clutch, is housed in a first motor case and is attached to an outer surface in a vehicle width direction of a sprocket cover.

### Citation List

### Patent Document

Patent Document 1: Japanese Patent No. 6578833

### SUMMARY OF INVENTION

### Technical Problem

In the clutch actuator, by the way, there is a demand for improving an attaching structure to a power unit from the perspective of suppressing its vibrations. Moreover, there is another demand for improving assembling performance of the clutch actuator without an increase in the number of components. However, Patent Document 1 does not specifically disclose the attaching structure of the clutch actuator.

The present invention provides a fastening structure of a clutch actuator that is enabled by firm fastening of the clutch actuator with good assembling performance. Furthermore, an object is to improve operability by enabling the clutch actuator to be disposed compactly because of the improvement in the assembling performance. In addition, such an object further improves traffic safety and contributes to development of a sustainable transportation system, accordingly.

### Solution to Problem

A fastening structure of a clutch actuator according to a first aspect of the present invention includes: a clutch device (40) which connects and disconnects power transmission between a motor (21) of an apparatus (1) and an output target (25); a clutch cover (30) which covers the clutch device (40); and a clutch actuator (60) which outputs driving force for actuating the clutch device (40), in which the clutch actuator (60) includes: at least one electric motor (61) provided as a drive source; a release shaft (53) which extends in a first axial direction, and which receives an input from the at least one electric motor (61), and then rotates; a gear (63) which decelerates rotational power output from the at least one electric motor (61), and which transmits the rotational power to the release shaft (53); and a case (71) which accommodates the at least one electric motor (61) and the gear (63), and which supports the release shaft (53) to be rotatable, and the clutch cover (30) and the case (71) include: a support shaft portion (90) which is provided to be coaxial with the release shaft (53), and which mutually supports; and a fastening portion (96, 97) which mutually fastens in a direction orthogonal to the first axial direction.

According to the first aspect, it becomes possible for the support shaft portion to restrict a relative displacement of the clutch cover and the case in the direction that intersects the first axial direction, so that the clutch actuator can be firmly fastened to the clutch cover. Furthermore, in fastening the case to the clutch cover with the fastening portion, it becomes possible to position the clutch cover and the case can with the support shaft portion in the direction that intersects the first axial direction beforehand, so that the case can be easily disposed at a desired position with respect to the clutch cover in the fastening portion. Therefore, the assembling performance of the clutch actuator can be improved. Thus, firm fastening of the clutch actuator is enabled with good assembling performance.

As for the fastening structure of the clutch actuator according to a second aspect of the present invention, in the fastening structure of the clutch actuator according to the above first aspect, the fastening portion (96, 97) may be disposed between both ends of a rotation shaft (61a) in a second axial direction of the rotation shaft (61a) of the at least one electric motor (61).

According to the second aspect, it becomes possible to fasten the clutch actuator to the clutch cover in the vicinity of the electric motor that is a heavy object, so that generation of vibrations of the clutch actuator can be effectively suppressed.

As for the fastening structure of the clutch actuator according to a third aspect of the present invention, in the fastening structure of the clutch actuator according to the above first or second aspect, the at least one electric motor (61) may include a first electric motor and a second electric motor, and the fastening portion (96, 97) may be disposed between the first electric motor and the second electric motor.

According to the third aspect, it becomes possible to fasten the clutch actuator to the clutch cover in the vicinity of the electric motor that is a heavy object and that easily causes vibrations of the clutch actuator, so that generation of the vibrations of the clutch actuator can be effectively suppressed.

As for the fastening structure of the clutch actuator according to a fourth aspect of the present invention, in the fastening structure of the clutch actuator according to one of the above first to third aspects, the support shaft portion (90) may have a spigot joint structure which supports the clutch cover (30) and the case (71) to be mutually rotatable.

According to the fourth aspect, the clutch actuator is rotated about the support shaft portion, so that the case can be easily disposed at a desired position with respect to the clutch cover. Therefore, the assembling performance of the clutch actuator can be improved. Furthermore, the clutch actuator is rotated about the support shaft portion to press the clutch actuator against the clutch cover, and then the case can be fastened to the clutch cover, so that the clutch actuator can be firmly fastened to the clutch cover.

As for the fastening structure of the clutch actuator according to a fifth aspect of the present invention, in the fastening structure of the clutch actuator according to one of the above first to fourth aspects, the fastening portion (96, 97) may be disposed to be shifted in the first axial direction with respect to the support shaft portion (90).

According to the fifth aspect, the support shaft portion allows the relative displacement of the clutch cover and the case in the first axial direction, and the fastening portion fastens the clutch cover and the case to each other in the direction orthogonal to the first axial direction, so that the clutch cover and the clutch actuator can be fastened to each other in a state in which the gap in the first axial direction between the case and the clutch cover is eliminated. Therefore, tolerance of the case and the clutch cover can be absorbed.

### Advantageous Effects of Invention

According to the above fastening structure of the clutch actuator, firm fastening of the clutch actuator is enabled with good assembling performance.

### BRIEF DESCRIPTION OF DRAWINGS

[FIG. 1] A right side view of a motorcycle according to one embodiment.
[FIG. 2] A cross-sectional view illustrating a part of a power unit according to one embodiment.
[FIG. 3] A perspective view illustrating a clutch cover according to an embodiment.
[FIG. 4] A right side view of the clutch cover according to an embodiment.
[FIG. 5] A cross-sectional view illustrating a clutch control device according to an embodiment.
[FIG. 6] A transverse cross-sectional view of a release shaft according to an embodiment.
[FIG. 7] A transverse cross-sectional view of the release shaft illustrated in FIG. 6, and a view illustrating driving of an upper release shaft and a lower release shaft by a clutch actuator.
[FIG. 8] A transverse cross-sectional view of the release shaft illustrated in FIG. 6, and a view illustrating driving of an intermediate release shaft and the lower release shaft in accordance with a manual operation.
[FIG. 9] A transverse cross-sectional view of the release shaft illustrated in FIG. 6, and a view illustrating a state in which the manual operation intervenes in driving the lower release shaft by the clutch actuator.
[FIG. 10] A right side view illustrating the clutch cover and the clutch actuator according to an embodiment.
[FIG. 11] A view of the clutch cover and the clutch actuator according to an embodiment when viewed from an axial direction.
[FIG. 12] A block diagram of a transmission system according to an embodiment.
[FIG. 13] An explanatory diagram illustrating transition of a clutch control mode of the motorcycle according to an embodiment.

### DESCRIPTION OF EMBODIMENTS

Hereinafter, embodiments of the present invention will be described with reference to the drawings. Note that in the following description, constitutions having the same or similar functions are denoted by the same reference numbers. In addition, redundant descriptions of these constitutions will be omitted, in some cases. In addition, in the following description, directions such as front, rear, up, down, left, and right coincide with directions with respect to a vehicle to be described below. That is, an up-down direction coincides with a vertical direction, and a left-right direction coincides with a vehicle width direction. Further, in the drawings to be used in the following description, an arrow UP indicates upward, an arrow FR indicates forward, and an arrow LH indicates leftward.

### <Entire Vehicle>

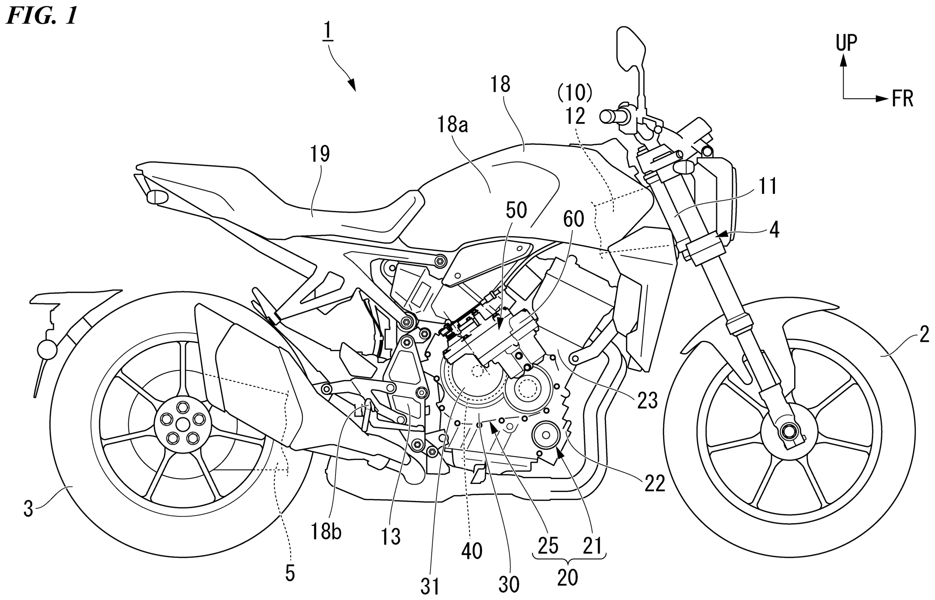

FIG. 1 is a right side view of a motorcycle according to one embodiment.

As illustrated in FIG. 1, a motorcycle 1 according to the present embodiment is a saddle-ride vehicle. The motorcycle 1 includes a front wheel 2, a rear wheel 3, a vehicle body frame 10, a power unit 20, and a clutch control device 50.

The vehicle body frame 10 includes a head pipe 11, a main frame 12, a pivot frame 13, and the like, which are integrally coupled together by welding or the like. The head pipe 11 is provided at a front end of the vehicle body frame 10. The head pipe 11 supports a steering stem of a front wheel suspension device 4. The front wheel 2 is supported by the front wheel suspension device 4. The main frame 12 extends rearward and downward from the head pipe 11. The pivot frame 13 extends downward from a rear end portion of the main frame 12. A front end portion of a swing arm 5 is swingably supported by a lower portion of the pivot frame 13. The rear wheel 3 is supported at a rear end portion of the swing arm 5. Note that the vehicle body frame 10 is not limited to the above constitution.

A fuel tank 18 is supported on the top of the main frame 12. A seat 19 is disposed on a rear side of the fuel tank 18. A knee grip portion 18a, which is recessed inward in a vehicle width direction, is formed at a rear portion of the fuel tank 18. The knee grip portions 18a are formed on both left and right sides of the fuel tank 18. The knee grip portions 18a are formed to be located inside the periphery of the left and right knees of the driver who is seated on the seat 19. A step 18b is disposed below the seat 19. On the step 18b, the driver places his/her foot.

The power unit 20 is supported by the vehicle body frame 10 so as not to be relatively displaced. The power unit 20 integrally includes an engine 21, a transmission 25, and a clutch device 40. The engine 21 is provided at a front portion of the power unit 20. The transmission 25 is provided at a rear portion of the power unit 20.

The engine 21 includes: a crankshaft extending in the vehicle width direction; a crankcase 22, which accommodates the crankshaft; and a cylinder 23, which stands forward and upward from the crankcase 22. The crankcase 22 is disposed below the main frame 12 in a side view. The cylinder 23 is integrally coupled to the crankcase 22. A piston is fitted in the cylinder 23. The reciprocating motion of the piston is converted into rotational motion of the crankshaft via a connecting rod. The crankcase 22 is made of metal.

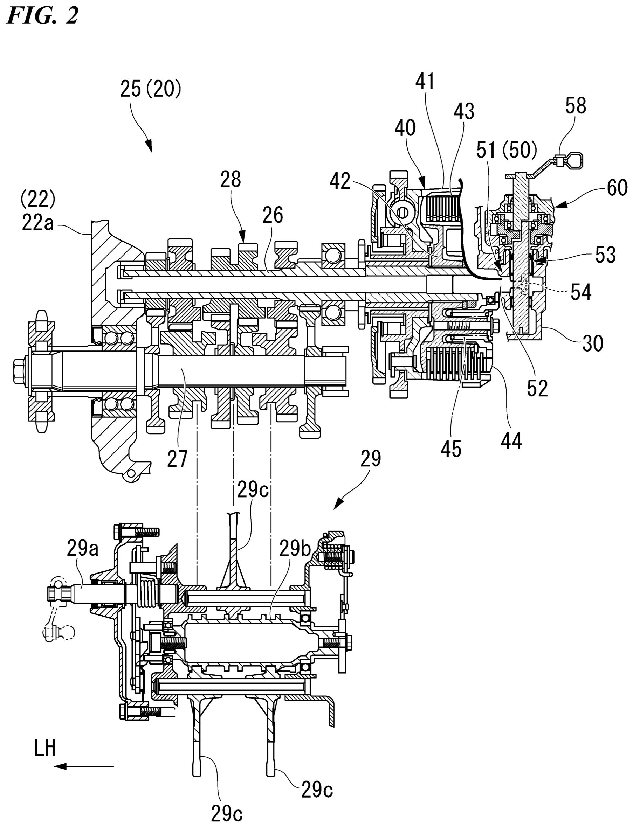

FIG. 2 is a cross-sectional view illustrating a part of a power unit according to one embodiment.

As illustrated in FIG. 2, the transmission 25 is accommodated in a rear portion of the crankcase 22. The rear portion of the crankcase 22 also serves as a transmission case 22a, which accommodates the transmission 25. The transmission 25 is a stepped transmission including: a main shaft 26 and a counter shaft 27, which are rotatably supported by the transmission case 22a; a shift gear group 28, which extends over the main shaft 26 and the counter shaft 27; and a change mechanism 29, which switches a gear pair used for power transmission between the main shaft 26 and the counter shaft 27 in the shift gear group 28. The main shaft 26 and the counter shaft 27 each extend in the vehicle width direction. The counter shaft 27 constitutes an output shaft of the power unit 20. The counter shaft 27 protrudes to the left side of the transmission case 22a, and is coupled to a drive sprocket. The rotation of the counter shaft 27 is transmitted from the left side of the transmission case 22a to the rear wheel 3 through a chain drive type of power transmission mechanism.

The main shaft 26 and the counter shaft 27 are disposed to be aligned in a front-rear direction on a rear side of the crankshaft. The clutch device 40 is coupled to a right end portion of the main shaft 26. The rotational power of the crankshaft is transmitted to the main shaft 26 through the clutch device 40, and is transmitted from the main shaft 26 to the counter shaft 27 through an optional gear pair of the shift gear group 28.

The change mechanism 29 is accommodated in the transmission case 22a. The change mechanism 29 includes a shift drum 29b, which has a hollow cylindrical shape, and which is parallel to the main shaft 26 and the counter shaft 27. The change mechanism 29 actuates a plurality of shift forks 29c with the rotation of the shift drum 29b. The shift fork 29c is actuated in accordance with a pattern of lead grooves formed on an outer circumference of the shift drum 29b. The change mechanism 29 switches a gear pair used for transmitting dynamic power between the main shaft 26 and the counter shaft 27 in the shift gear group 28 in accordance with the actuation of the shift fork 29c.

A clutch cover 30 is coupled to the transmission case 22a. The clutch cover 30 is disposed on the right side of the transmission case 22a, and is coupled to the crankcase 22. The clutch cover 30 is disposed on an extension of the main shaft 26. The clutch cover 30 defines a clutch chamber between the clutch cover 30 and the right crankcase 22.

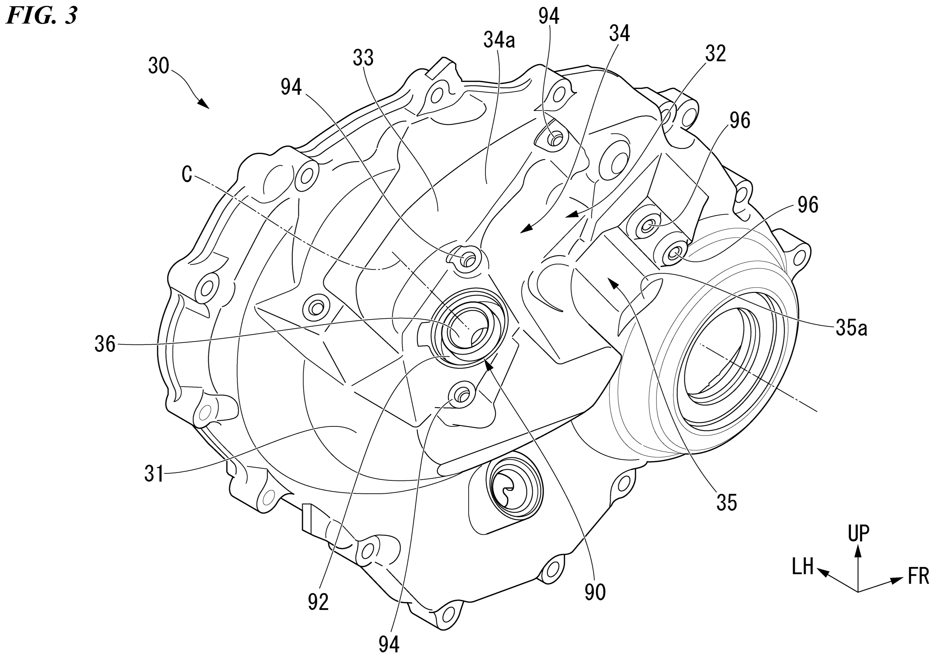

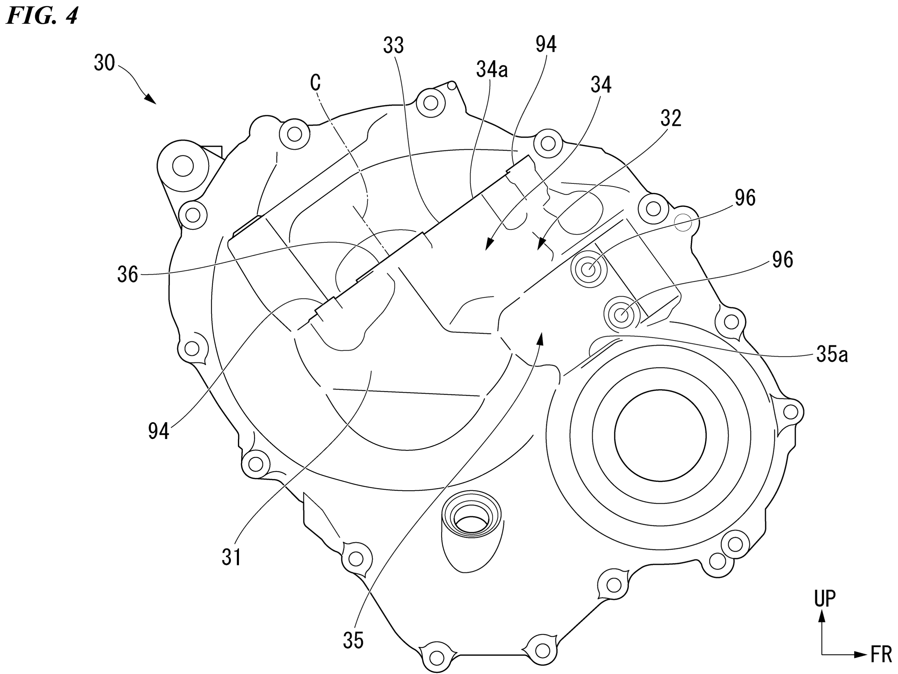

FIG. 3 is a perspective view illustrating the clutch cover according to an embodiment. FIG. 4 is a right side view of the clutch cover according to an embodiment.

As illustrated in FIGS. 3 and 4, the clutch cover 30 includes a bulge portion 31, which bulges outward in the vehicle width direction. The bulge portion 31 corresponds to a circular range to be coaxial with the main shaft 26 in a vehicle side view. A cover recess portion 32 is formed in an upper portion of the bulge portion 31. The cover recess portion 32 changes an outer side surface of the bulge portion 31 inward in the vehicle width direction with respect to a lower portion of the bulge portion 31. The cover recess portion 32 forms a step portion 33, which changes the outer side surface of the bulge portion 31 in a stepwise manner. The step portion 33 forms a flat surface along the vehicle width direction. The cover recess portion 32 receives a clutch actuator 60 to be attached to the clutch cover 30.

The cover recess portion 32 includes a first recess portion 34 and a second recess portion 35. The cover recess portion 32 is formed so that the second recess portion 35 is shallower in the vehicle width direction than the first recess portion 34. The first recess portion 34 forms a first planar portion 34a. A shaft insertion portion 36, into which the release shaft 53 is inserted, is formed in the first planar portion 34a. The second recess portion 35 forms a second planar portion 35a.

As illustrated in FIG. 2, the clutch device 40 is a multiple disc friction clutch that connects and disconnects power transmission between the crankshaft of the engine 21 and the main shaft 26 of the transmission 25. The clutch device 40 is disposed in a clutch chamber between the clutch cover 30 and the crankcase 22. The clutch device 40 is located in a position that overlaps the bulge portion 31 of the clutch cover 30 in a vehicle side view.

The clutch device 40 is a wet multi-plate clutch in which a plurality of clutch plates 43 are stacked in an axial direction. The clutch device 40 includes: a clutch outer 41; a clutch center 42; and the plurality of clutch plates 43.

The clutch outer 41 is driven by the rotational power transmitted from the crankshaft all the time. The clutch center 42 is disposed in the clutch outer 41, and is integrally and rotatably supported by the main shaft 26. The plurality of clutch plates 43 are stacked between the clutch outer 41 and the clutch center 42. The plurality of clutch plates 43 are frictionally engaged with the clutch outer 41 and the clutch center 42.

A pressure plate 44 having substantially the same diameter as those of the clutch plates 43 is disposed on the right side (an outer side in the vehicle width direction) of the clutch plates 43 that are stacked. The pressure plate 44 receives a resilient load of a clutch spring 45, is biased leftward, and brings the clutch plates 43 that are stacked into pressure contact with each other (frictional engagement). Accordingly, the clutch device 40 is brought into a connection state to be capable of transmitting the dynamic power. The clutch device 40 is a normally closed clutch that is in a connection state in a normal state with no external input.

The pressure contact (the frictional engagement) between the clutch plates 43 is released by the actuation of a release mechanism 51 inside the clutch cover 30. The release mechanism 51 is actuated by at least one of operation on a clutch lever (a clutch operation element) by an occupant, and application of torque by a clutch actuator 60.

The clutch control device 50 includes: the release mechanism 51; and the clutch actuator 60, which outputs driving force for actuating the clutch device 40. The release mechanism 51 includes: a lifter shaft 52; and the release shaft 53.

The lifter shaft 52 has a central axis along the vehicle width direction. The lifter shaft 52 is held in a right side portion of the main shaft 26, and is capable of reciprocating in the vehicle width direction. The release shaft 53 has a central axis C along a direction orthogonal to the vehicle width direction. The release shaft 53 is rotatably held by the clutch cover 30. The release shaft 53 is inclined rearward in the axial direction so that its upper end portion is positioned on a rear side of its lower end portion, when viewed in the axial direction (in a vehicle side view) of the main shaft 26. In the following description, the axial direction of the release shaft 53 will be simply referred to as the axial direction, unless otherwise specified. In addition, regarding the circumferential direction that circles around the axis line along the axial direction, a clockwise direction when viewed from above along the axial direction will be simply referred to as a clockwise direction, and a direction opposite to the clockwise direction will be referred to as a counterclockwise direction.

An upper portion of the release shaft 53 protrudes to the outside of the clutch cover 30. A driven clutch lever 58 is integrally and rotatably attached to an upper portion of the release shaft 53. The driven clutch lever 58 is coupled to the clutch lever through an operation cable.

A lower portion of the release shaft 53 is located inside the clutch cover 30. The lower portion of the release shaft 53 includes an eccentric cam portion 54. The eccentric cam portion 54 is engaged with a right end portion of the lifter shaft 52. The release shaft 53 rotates about the central axis C to move the lifter shaft 52 rightward with the action of the eccentric cam portion 54. The lifter shaft 52 is capable of reciprocating integrally with the pressure plate 44 of the clutch device 40. Therefore, when the lifter shaft 52 moves rightward, the pressure plate 44 moves rightward against the biasing force of the clutch spring 45. This releases the frictional engagement between the clutch plates 43 that are stacked. This brings the clutch device 40, which is a normally closed clutch, into a disconnection state in which the dynamic power cannot be transmitted.

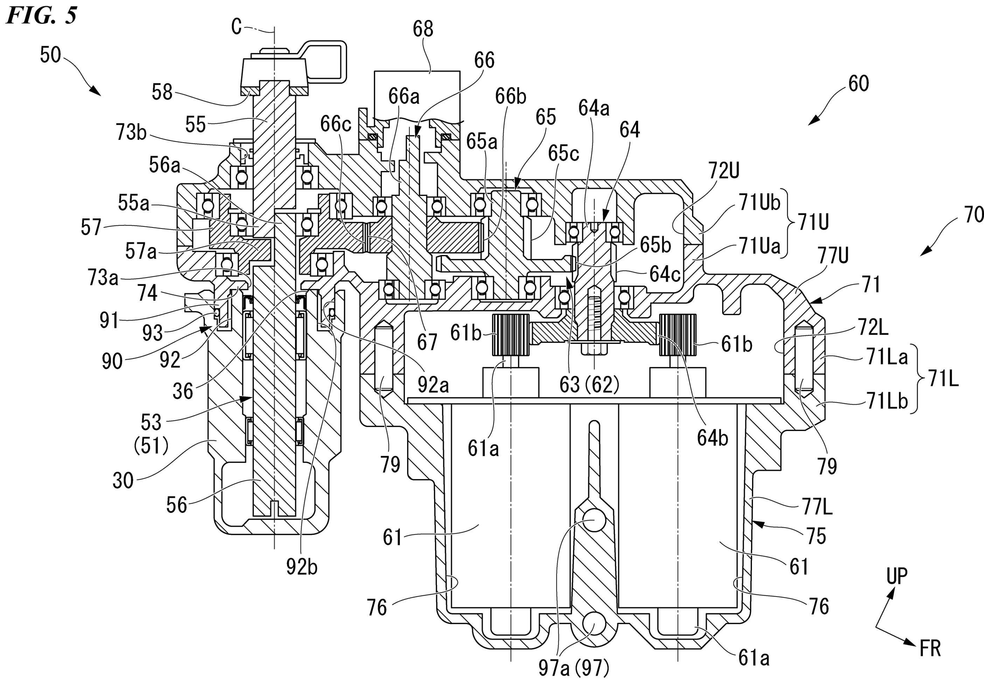

FIG. 5 is a cross-sectional view illustrating the clutch control device according to an embodiment. Note that FIG. 5 illustrates a cut section including the rotation axis of each rotation body included in the clutch actuator 60.

As illustrated in FIG. 5, the release shaft 53 is divided into a plurality of elements to be rotatable by individually receiving an input from the clutch actuator 60 and an input of an operation by the occupant. The release shaft 53 includes: an upper release shaft 55, which constitutes an upper portion of the release shaft 53; a lower release shaft 56, which constitutes a lower portion of the release shaft 53; and an intermediate release shaft 57. The intermediate release shaft 57 is disposed to overlap a lower end portion of the upper release shaft 55 and an upper end portion of the lower release shaft 56.

The upper release shaft 55 has a cylindrical shape. An upper end portion of the upper release shaft 55 protrudes outward from a unit case 70 of the clutch actuator 60. The driven clutch lever 58 is integrally and rotatably supported on an upper end portion of the upper release shaft 55. The upper release shaft 55 receives a force of the operation by the driver via a clutch lever or the like, and then rotates. A return spring is attached to the driven clutch lever 58. The return spring applies, to the driven clutch lever 58, biasing force in a direction opposite to the rotation (rotation in a clutch disconnection direction) in accordance with the operation on the clutch lever.

The lower release shaft 56 has a cylindrical shape. The lower portion of the lower release shaft 56 is located inside the clutch cover 30. A lower portion of the lower release shaft 56 is rotatably supported by the clutch cover 30. An eccentric cam portion 54 is formed in the lower portion of the lower release shaft 56 (see FIG. 2). A lower return spring is attached to a lower end portion of the lower release shaft 56. The lower return spring applies, to the lower release shaft 56, biasing force in a direction opposite to the rotation in a clutch disconnection direction. An upper portion of the lower release shaft 56 protrudes from the first planar portion 34a of the clutch cover 30 to the outside of the clutch cover 30 through the shaft insertion portion 36 of the clutch cover 30. The upper portion of the lower release shaft 56 faces the inside of a gear case 71 of the clutch actuator 60.

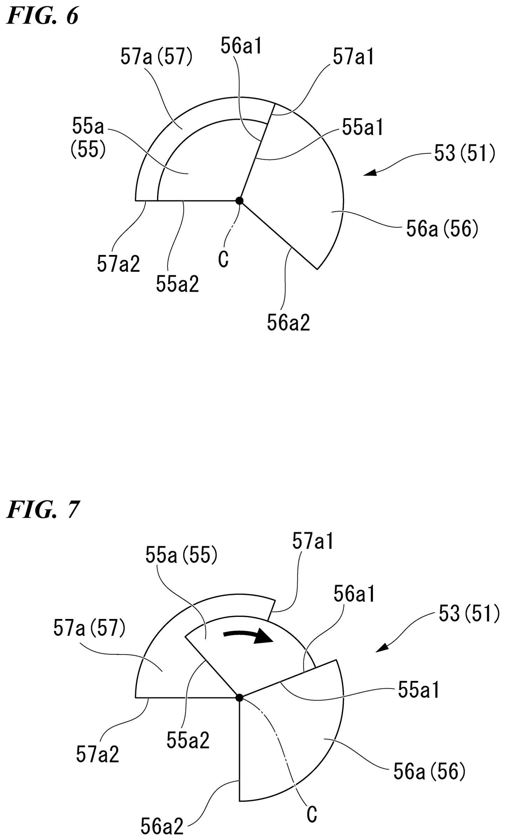

FIG. 6 is a transverse cross-sectional view of the release shaft according to an embodiment, and illustrates cams of the upper release shaft, the lower release shaft, and the intermediate release shaft.

As illustrated in FIGS. 5 and 6, a manual-side engaged portion 55a, which extends in the axial direction, is provided at the lower end portion of the upper release shaft 55. An engaging portion 56a, which extends in the axial direction, is provided at an upper end portion of the lower release shaft 56. The manual-side engaged portion 55a and the engaging portion 56a are each formed in a fan shape in cross-section. The manual-side engaged portion 55a and the engaging portion 56a overlap each other in the axial direction, and face each other in the circumferential direction. Accordingly, a first engaged surface 55a1, which faces a clockwise direction of the manual-side engaged portion 55a, presses a first engaging surface 56a1, which faces a counterclockwise direction of the engaging portion 56a, and is capable of rotating the lower release shaft 56 in the clockwise direction (see FIG. 7).

A second engaged surface 55a2, which faces the counterclockwise direction of the manual-side engaged portion 55a, and a second engaging surface 56a2, which faces the clockwise direction of the engaging portion 56a, are spaced apart from each other in the circumferential direction. In a case where there is an input into the lower release shaft 56 without the intervention of the upper release shaft 55, the lower release shaft 56 is capable of rotating in the clockwise direction independently of the upper release shaft 55.

The intermediate release shaft 57 has, for example, a cylindrical shape. The intermediate release shaft 57 can be inserted into an engagement part between the lower end portion of the upper release shaft 55 and the upper end portion of the lower release shaft 56. A control-side engaged portion 57a, which extends in the axial direction, is provided on the intermediate release shaft 57. The control-side engaged portion 57a is formed in a fan shape in cross-section.

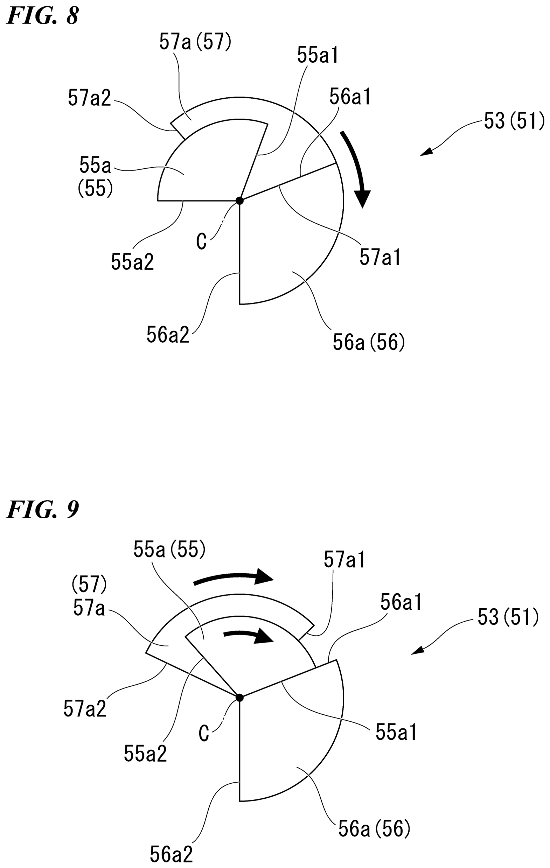

The control-side engaged portion 57a of the intermediate release shaft 57 and the engaging portion 56a of the lower release shaft 56 overlap each other in the axial direction, and face each other in the circumferential direction. Accordingly, a first engaged surface 57a1, which faces the clockwise direction of the control-side engaged portion 57a, presses the first engaging surface 56a1 of the engaging portion 56a, and is capable of rotating the lower release shaft 56 in the clockwise direction (see FIG. 8).

The control-side engaged portion 57a avoids the manual-side engaged portion 55a of the upper release shaft 55 in the axial direction. Accordingly, the intermediate release shaft 57 is capable of driving the rotation of the lower release shaft 56 independently of the upper release shaft 55. In addition, the upper release shaft 55 is capable of driving the rotation of the lower release shaft 56 independently of the intermediate release shaft 57 (see FIG. 9).

A second engaged surface 57a2, which faces the counterclockwise direction, of the control-side engaged portion 57a and the second engaging surface 56a2 of the engaging portion 56a are spaced apart from each other in the circumferential direction. Accordingly, in a case where there is an input into the lower release shaft 56 without the intervention of the intermediate release shaft 57, the lower release shaft 56 is rotatable in the clockwise direction independently of the intermediate release shaft 57.

As illustrated in FIG. 5, the clutch actuator 60 controls actuation torque applied to the release shaft 53 and connects and disconnects the clutch device 40. The clutch actuator 60 is attached to an upper portion of the clutch cover 30. The clutch actuator 60 includes: a motor 61 (electric motor) as a drive source; a speed reduction mechanism 62, which transmits the driving force of the motor 61 to the release shaft 53; and the unit case 70, which accommodates the motor 61 and the speed reduction mechanism 62.

The motor 61 is, for example, a DC motor. The motor 61 is disposed so that the rotation axis of the rotor is along the axial direction of the release shaft 53. The motor 61 is disposed so that its rotation shaft 61a protrudes upward and downward. In one embodiment, the clutch actuator 60, which is a single constitution, includes a pair of motors 61. The pair of motors 61 are aligned in the front-rear direction. Control of the pair of motors 61 will be described later.

The speed reduction mechanism 62 decelerates the rotational power output from the motor 61 and transmits the rotational power to the release shaft 53. The speed reduction mechanism 62 includes a gear train 63. Each gear of the gear train 63 has a rotation axis along the axial direction. The gear train 63 includes: a driving gear 61b; a first reduction gear 64b; a first small-diameter gear 64c; a second reduction gear 65b; a second small-diameter gear 65c; a third reduction gear 66b; a third small-diameter gear 66c; and a driven gear 67.

The driving gear 61b is provided integrally with the rotation shaft 61a of each motor 61. The first reduction gear 64b is disposed between the two driving gears 61b. The first reduction gear 64b meshes with each driving gear 61b. The first reduction gear 64b decelerates the rotation of each driving gear 61b. The first small-diameter gear 64c is provided coaxially with the first reduction gear 64b. The second reduction gear 65b meshes with the first small-diameter gear 64c. The second reduction gear 65b decelerates the rotation of the first small-diameter gear 64c. The second small-diameter gear 65c is provided coaxially with the second reduction gear 65b. The third reduction gear 66b meshes with the second small-diameter gear 65c. The third reduction gear 66b decelerates the rotation of the second small-diameter gear 65c. The third small-diameter gear 66c is provided coaxially with the third reduction gear 66b. The driven gear 67 meshes with the second small-diameter gear 65c. The driven gear 67 decelerates the rotation of the second small-diameter gear 65c.

The first reduction gear 64b and the first small-diameter gear 64c are each provided to be integrally rotatable with a first support shaft 64a. The first reduction gear 64b, the first small-diameter gear 64c, and the first support shaft 64a constitute a first reduction shaft 64. The first reduction shaft 64 has a central axis along the axial direction.

The second reduction gear 65b and the second small-diameter gear 65c are each provided to be integrally rotatable with a second support shaft 65a. The second reduction gear 65b, the second small-diameter gear 65c, and the second support shaft 65a constitute a second reduction shaft 65. The second reduction shaft 65 has a central axis along the axial direction.

The third reduction gear 66b and the third small-diameter gear 66c overlap each other in the axial direction. The third reduction gear 66b and the third small-diameter gear 66c are integrally formed with each other. The third reduction gear 66b and the third small-diameter gear 66c are provided to be integrally rotatable with a third support shaft 66a. The third reduction gear 66b, the third small-diameter gear 66c, and the third support shaft 66a constitute a third reduction shaft 66. The third reduction shaft 66 has a central axis along the axial direction. The third reduction shaft 66 is provided with a rotation angle sensor 68, which detects a rotation angle of the third reduction shaft 66.

The third reduction shaft 66 is positioned on a front side of the second reduction shaft 65. The second reduction shaft 65 is positioned on a front side of the first reduction shaft 64. The release shaft 53 is provided on a front side of the third reduction shaft 66. The central axis C of the release shaft 53 and the central axes of the reduction shafts 64, 65, and 66 are aligned on an identical straight line that extends in the front-rear direction, when viewed in the axial direction.

The first support shaft 64a, the second support shaft 65a, and the third support shaft 66a are each rotatably supported by the unit case 70. The third reduction gear 66b is a fan-shaped gear with the third support shaft 66a as its center. The third reduction gear 66b is provided to enlarge on the front side of the third support shaft 66a.

The driven gear 67 is provided to be integrally rotatable with the intermediate release shaft 57 of the release shaft 53. The driven gear 67 is a fan-shaped gear with the release shaft 53 as its center. The driven gear 67 is provided to enlarge on the front side of the release shaft 53. The third reduction gear 66b and the driven gear 67 are formed in the fan-shaped gears, thereby enabling downsizing of the speed reduction mechanism 62 and the clutch actuator 60. That is, also in a case where a large-diameter reduction gear is provided in order to gain a reduction ratio, a portion other than a mesh range of the reduction gear is cut out to form a fan shape, so that protruding outward in the vehicle width direction of the speed reduction mechanism 62 can be particularly suppressed, and the weight of the speed reduction mechanism 62 can be reduced.

The speed reduction mechanism 62 connects the motor 61 with the release shaft 53 to be capable of interlocking all the time. In this manner, the clutch actuator 60 constitutes a system for directly connecting and disconnecting the clutch device 40.

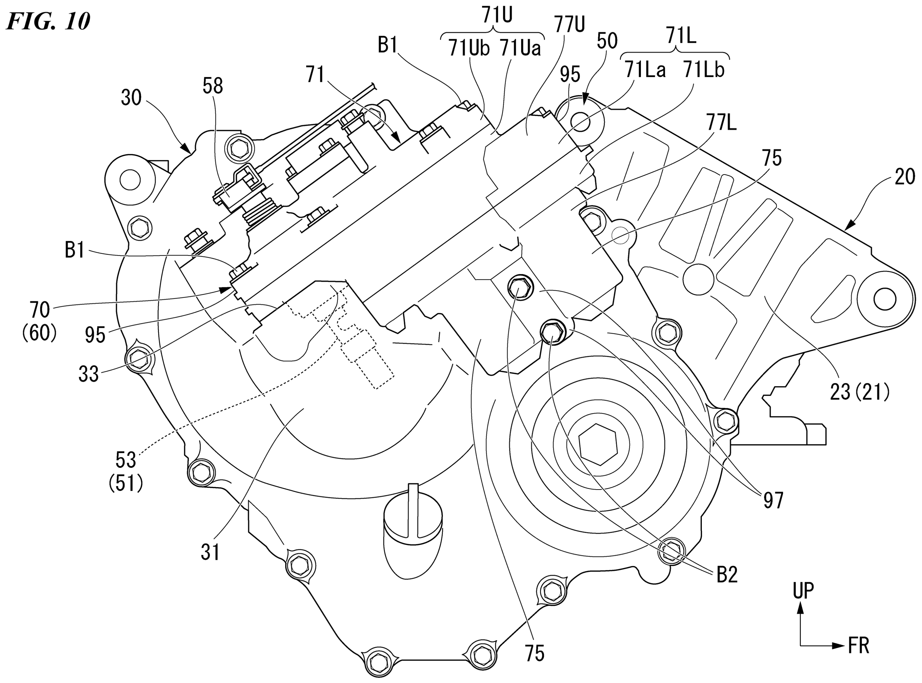

FIG. 10 is a right side view illustrating the clutch cover and the clutch actuator according to an embodiment.

As illustrated in FIGS. 5 and 10, the unit case 70 includes the gear case 71 and a motor case 75.

The gear case 71 rotatably supports the first support shaft 64a, the second support shaft 65a, and the third support shaft 66a. The gear case 71 accommodates the gear train 63. The gear case 71 is formed in upper and lower two stages in the axial direction. Hereinafter, an upper portion of the gear case 71 will be referred to as an upper stage portion 71U, and a lower portion of the gear case 71 will be referred to as a lower stage portion 71L. The upper stage portion 71U is shifted rearward along a plane orthogonal to the axial direction with respect to the lower stage portion 71L. The motor case 75, which extends along the axial direction, is continuous below the lower stage portion 71L.

The upper stage portion 71U has a rectangular shape elongated in the front-rear direction, when viewed in the axial direction. The upper stage portion 71U forms an upper stage gear housing chamber 72U. The upper stage gear housing chamber 72U houses the first small-diameter gear 64c, the second reduction gear 65b, the second small-diameter gear 65c, the third reduction gear 66b, the third small-diameter gear 66c, and the driven gear 67 of the gear train 63. The upper stage portion 71U of the gear case 71 is vertically divided into two parts with a division plane orthogonal to the axial direction as a boundary. Hereinafter, a lower portion of the upper stage portion 71U will be referred to as an upper stage portion main body 71Ua, and an upper portion of the upper stage portion 71U will be referred to as a case upper cover 71Ub. The upper stage portion main body 71Ua is opened upward. The case upper cover 71Ub closes an upper opening of the upper stage portion main body 71Ua from above.

The lower stage portion 71L has an oval shape elongated in the front-rear direction, when viewed in the axial direction. The lower stage portion 71L forms a lower stage gear housing chamber 72L. The upper stage gear housing chamber 72U and the lower stage gear housing chamber 72L are partitioned by a partition wall. The lower stage gear housing chamber 72L houses the driving gear 61b and the first reduction gear 64b of the rotation shaft 61a of each motor 61 in the gear train 63. The lower stage portion 71L of the gear case 71 is vertically divided into two parts with a division plane orthogonal to the axial direction as a boundary. Hereinafter, an upper part of the lower stage portion 71L will be referred to as a lower stage portion main body 71La, and a lower part of the lower stage portion 71L will be referred to as a case lower cover 71Lb. The lower stage portion main body 71La is opened downward. The case lower cover 71Lb closes a lower portion of the lower stage portion main body 71La from below.

The motor case 75 forms a motor housing chamber 76, which houses the two motors 61. The motor housing chamber 76 houses two motors 61 each having a cylindrical shape to be aligned in parallel with each other. The motor case 75 has a bottomed cylindrical and oval shape in cross-section. A case lower cover 71Lb is integrally formed on an upper portion of the motor case 75 to enlarge its cross-sectional shape. The motor case 75 and the case lower cover 71Lb are integrally formed with each other to constitute a lower case body 77L.

The upper stage portion main body 71Ua and the lower stage portion main body 71La are integrally formed with each other to constitute an upper case body 77U. The case upper cover 71Ub is attached to the upper case body 77U from above, and the upper stage gear housing chamber 72U is formed between the upper case body 77U and the case upper cover 71Ub. The case lower cover 71Lb of the lower case body 77L is attached to the upper case body 77U from below, and the lower stage gear housing chamber 72L is formed between the upper case body 77U and the case lower cover 71Lb. The lower case body 77L and the upper case body 77U are positioned with each other via a pair of front and rear knock pins 79. A lower portion of each of the knock pins 79 is fitted into a holding hole of the lower case body 77L. An upper portion of each of the knock pins 79 is inserted into a fitting hole of the upper case body 77U.

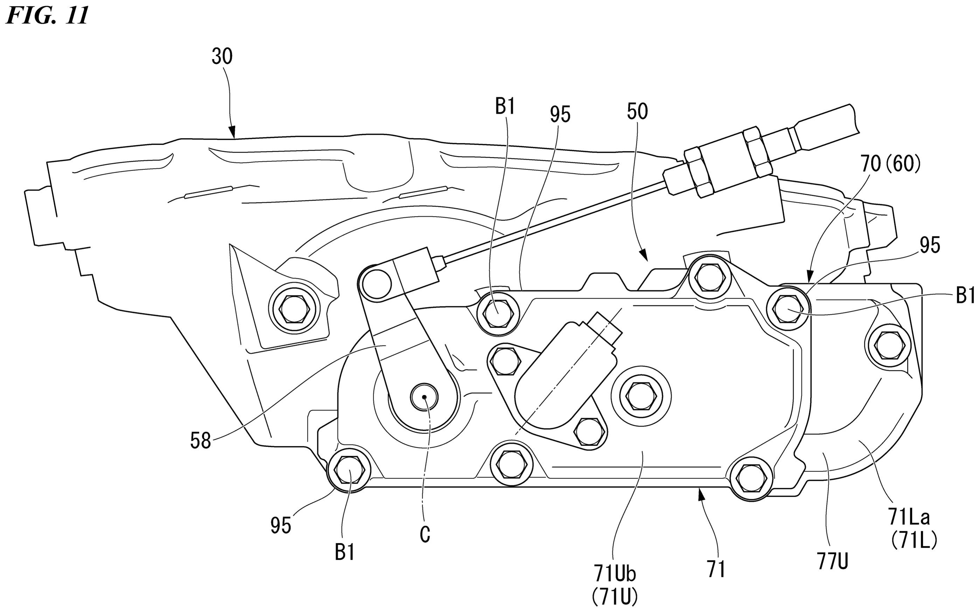

FIG. 11 is a view of the clutch cover and the clutch actuator according to an embodiment when viewed from an axial direction.

As illustrated in FIGS. 3, 10, and 11, the gear case 71 enters the first recess portion 34 of the cover recess portion 32 of the clutch cover 30. A lower surface of the upper stage portion 71U of the gear case 71 is along the first planar portion 34a of the first recess portion 34 of the clutch cover 30. The motor case 75 enters the second recess portion 35 of the cover recess portion 32 of the clutch cover 30.

As illustrated in FIG. 5, a first opening portion 73a and a second opening portion 73b, into which the release shaft 53 is inserted, are formed in the gear case 71. The first opening portion 73a faces the shaft insertion portion 36 of the clutch cover 30. The first opening portion 73a penetrates through the upper stage portion main body 71Ua in the axial direction. The gear case 71 receives the lower release shaft 56, which protrudes from the clutch cover 30, through the first opening portion 73a. The second opening portion 73b penetrates through the case upper cover 71Ub in the axial direction coaxially with the first opening portion 73a. The inner circumferential surface of the second opening portion 73b rotatably supports the upper release shaft 55 of the release shaft 53 in a state in which the release shaft 53 protrudes to the outside of the gear case 71 through the second opening portion 73b. The gear case 71 rotatably holds the intermediate release shaft 57 between the first opening portion 73a and the second opening portion 73b.

A fastening structure of the clutch cover 30 and the clutch actuator 60 will be described.

The clutch cover 30 and the gear case 71 include a support shaft portion 90, which is provided to be coaxial with the release shaft 53, and which mutually supports the clutch cover 30 and the gear case 71. The support shaft portion 90 has a spigot joint structure including the clutch cover 30 and the gear case 71 to be mutually rotatable. The support shaft portion 90 allows a relative displacement of the clutch cover 30 and the gear case 71 in the axial direction. The support shaft portion 90 restricts the relative displacement of the clutch cover 30 and the gear case 71 in a direction that intersects the axial direction. The support shaft portion 90 includes: a protrusion portion 91 which has a cylindrical shape, and which is provided in the gear case 71; and a recess portion 92, which is provided in the clutch cover 30, and which receives the protrusion portion 91.

The protrusion portion 91 protrudes on the clutch cover 30 side along the axial direction. The protrusion portion 91 is formed to surround the first opening portion 73a. The protrusion portion 91 is provided to be spaced apart in the radial direction with respect to an opening edge of the first opening portion 73a. In other words, the gear case 71 includes an inner flange 74, which protrudes inward in the radial direction from the base end of the protrusion portion 91 and extends over the entire circumference to form the opening edge of the first opening portion 73a.

The recess portion 92 is opened on the first planar portion 34a of the clutch cover 30. The recess portion 92 extends in an annular shape to be coaxial with the release shaft 53, when viewed from the axial direction, to surround the shaft insertion portion 36. The recess portion 92 includes: an outer surface 92a, which faces the outer circumferential surface of the protrusion portion 91; and an inner surface 92b, which faces the inner circumferential surface of the protrusion portion 91. The recess portion 92 slidably holds the protrusion portion 91 between the outer surface 92a and the inner surface 92b, and the support shaft portion 90 supports the clutch cover 30 and the gear case 71 to be mutually rotatable. The support shaft portion 90 includes a seal member 93, which has an annular shape, and which is interposed between the outer circumferential surface of the protrusion portion 91 and the outer surface 92a of the recess portion 92.

The clutch cover 30 and the gear case 71 are positioned in the axial direction by the inner flange 74 of the gear case 71 abutting an annular portion located between the recess portion 92 and the shaft insertion portion 36 on the first planar portion 34a. However, the clutch cover 30 and the gear case 71 may be positioned in the axial direction at other positions.

As illustrated in FIGS. 3 and 11, a plurality of first fastening portions 94 for fastening the upper stage portion 71U of the gear case 71 are formed on the first planar portion 34a. A bolt B1 along the axial direction of the release shaft 53 is screwed into the first fastening portion 94. In the gear case 71, the same number of case-side fastening portions 95 with the number of the first fastening portions 94, which are fastened by insertion of the bolts B1, are formed to correspond to the plurality of first fastening portions 94. A bolt hole, into which the bolt B1 is inserted, penetrates the case-side fastening portion 95 in the axial direction. The first fastening portion 94 and the case-side fastening portion 95 axially fasten the clutch cover 30 and the gear case 71 to each other.

As illustrated in FIGS. 3 and 10, a plurality of (two in the present embodiment) second fastening portions 96 for fastening the motor case 75 are formed in the lower portion of the second recess portion 35. A bolt B2 along a direction orthogonal to the axial direction is screwed into the second fastening portion 96. In the motor case 75, the same number of cover-side fastening portions 97 with the number of the second fastening portions 96, which are fastened by insertion of the bolts B2, are formed to correspond to the plurality of second fastening portions 96. A bolt hole 97a, into which the bolt B2 is inserted, penetrates each cover-side fastening portion 97 in the direction orthogonal to the axial direction. The second fastening portion 96 and the cover-side fastening portion 97 fasten the clutch cover 30 and the motor case 75 to each other in the direction orthogonal to the axial direction. The bolt hole 97a is formed in a shape capable of absorbing tolerance in the axial direction when the clutch cover 30 is fastened to the motor case 75. The cover-side fastening portion 97 is disposed between the pair of motors 61. The cover-side fastening portion 97 is disposed between both ends of a rotation shaft 61a of each of the pair of motors 61 in the axial direction.

The clutch actuator 60 is attached to the clutch cover 30 in the following sequence. First, the protrusion portion 91 of the clutch actuator 60 is inserted into the recess portion 92 of the clutch cover 30. Subsequently, the clutch actuator 60 is rotated about the support shaft portion 90 including the protrusion portion 91 and the recess portion 92 to press the cover-side fastening portion 97 of the clutch actuator 60 against the second fastening portion 96 of the clutch cover 30. After fastening the second fastening portion 96 and the cover-side fastening portion 97 with the bolt B2 in this state, the first fastening portion 94 and the case-side fastening portion 95 are fastened together with the bolt B1. When the clutch actuator 60 is attached to the clutch cover 30, the release shaft 53, which is linear, and in which the upper release shaft 55, the intermediate release shaft 57, and the lower release shaft 56 are coupled to each other, is formed.

### <Transmission System>

Here, regarding the motorcycle 1, the driver performs only the shift operation of the transmission 25 (foot operation on a shift pedal), and the connection and disconnection operation of the clutch device 40 is automatically performed with electric control in accordance with the operation on the shift pedal. That is, a so-called semi-automatic transmission system 100 (an automatic clutch transmission system) is employed for the motorcycle 1.

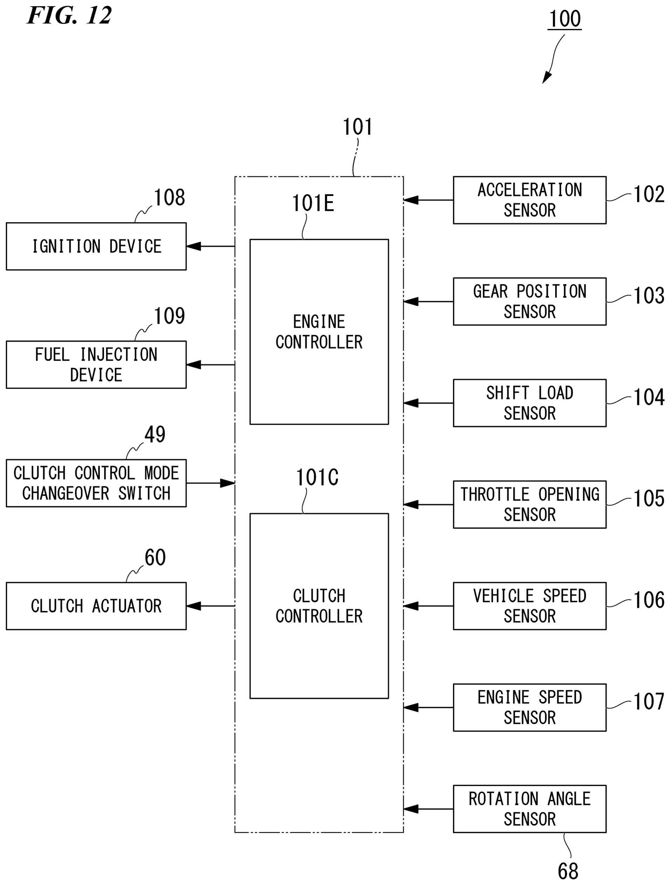

FIG. 12 is a block diagram of the transmission system according to an embodiment.

As illustrated in FIG. 12, the transmission system 100 of the motorcycle 1 mainly includes a controller 101, an acceleration sensor 102, a gear position sensor 103, a shift load sensor 104, a throttle opening sensor 105, a vehicle speed sensor 106, an engine speed sensor 107, an ignition device 108, and a fuel injection device 109, in addition to the clutch actuator 60.

The controller 101 controls the actuation of the ignition device 108 and the fuel injection device 109, and also controls the actuation of the clutch actuator 60. The control by the controller 101 is conducted, based on detection information from the acceleration sensor 102, the gear position sensor 103, and the shift load sensor 104 (for example, a torque sensor), and various types of vehicle state detection information from the throttle opening sensor 105, the vehicle speed sensor 106, the engine speed sensor 107, and the like.

The acceleration sensor 102 detects a behavior of a vehicle body. The gear position sensor 103 detects a gear position from the rotation angle of the shift drum 29b. The shift load sensor 104 detects operation torque that has been input into a shift spindle 29a (see FIG. 2) of the change mechanism 29. The throttle opening sensor 105 detects a throttle opening. The vehicle speed sensor 106 detects a vehicle speed. The engine speed sensor 107 detects a rotation speed of the engine.

The controller 101 includes a clutch controller 101C and an engine controller 101E, which are independent of each other. The clutch controller 101C mainly controls the driving of the clutch actuator 60. The engine controller 101E mainly controls the driving of the engine 21. The clutch controller 101C and the engine controller 101E are constituted as, for example, electronic control units (ECUs) that are separate from each other. The clutch controller 101C and the engine controller 101E may be constituted in an integrated ECU as long as they conduct control independently of each other. The clutch controller 101C and the engine controller 101E perform the control in coordination with each other in both cases where they are constituted separately from each other and where they are constituted integrally with each other.

The clutch controller 101C process an electric current value to be supplied to the motor 61 in order to connect and disconnect the clutch device 40, based on a preset processing program. The electric current supplied to the motor 61 is obtained from a correlation with torque output from the motor 61. The target torque of the motor 61 is proportional to actuation torque (driven clutch lever torque to be described later) applied to the release shaft 53. The electric current value supplied to the motor 61 is detected by an electric current sensor included in the clutch controller 101C. The actuation of the clutch actuator 60 is controlled in accordance with a change in detection value of the electric current sensor.

### <Clutch Control Mode>

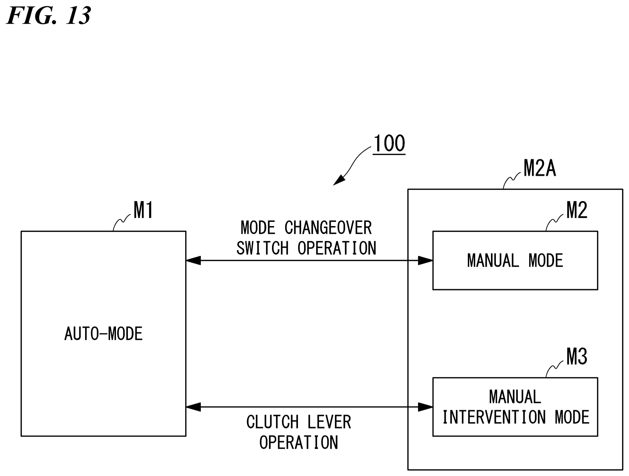

FIG. 13 is an explanatory diagram illustrating transition of a clutch control mode of the motorcycle according to an embodiment.

As illustrated in FIG. 13, the transmission system 100 according to the present embodiment has three types of clutch control modes. The clutch control mode includes: an auto-mode M1 in which automatic control is performed; a manual mode M2 in which manual operation is performed; and a manual intervention mode M3 in which a temporary manual operation is performed. The clutch control mode appropriately transitions among the above three types of modes in accordance with the operation on a clutch control mode changeover switch 49 (see FIG. 12) and an operation on the clutch operation element. Note that a system including the manual mode M2 and the manual intervention mode M3 will be referred to as a manual system M2A.

The auto-mode M1 is a mode of controlling the clutch device 40, by processing a clutch capacity suitable for a traveling state in accordance with automatic start and shift control. The manual mode M2 is a mode of controlling the clutch device 40, by processing the clutch capacity in accordance with a clutch operation instruction from an occupant. The manual intervention mode M3 is a mode of controlling the clutch device 40, by receiving a clutch operation instruction from the occupant during the auto-mode M1, and processing the clutch capacity from the clutch operation instruction, and is a temporary manual operation mode. Note that in the manual intervention mode M3, for example, when a state in which the occupant stops operating the clutch operation element (a completely released state) continues for a prescribed period of time, the mode may be set to return to the auto-mode M1.

For example, at the time of activating the system, the transmission system 100 starts control from a clutch-on state (a connected state) in the auto-mode M1. In addition, the transmission system 100 is set to return to the clutch-on state in the auto-mode M1, when the engine 21 is stopped (when the system is turned off). In the clutch device 40, which is a normally closed clutch, the supply of electric power to the motor 61 of the clutch actuator 60 is not necessary, when the clutch is turned on. On the other hand, in a clutch-off state (a disconnected state) of the clutch device 40, the supply of electric power to the motor 61 is maintained.

In the auto-mode M1, the clutch control is basically conducted automatically. In the auto-mode M1, the motorcycle 1 is enabled to travel without a lever operation. In the auto-mode M1, the clutch capacity is controlled, based on the throttle opening, the engine speed, the vehicle speed, the shift sensor output, and the like. This enables the motorcycle 1 to start only with a throttle operation without an engine stall. In addition, it becomes possible to change the gear ratio of the motorcycle 1 only with a shift operation. Further, in the auto-mode M1, the mode is switched to the manual intervention mode M3, when the occupant grips the clutch lever.

In the manual mode M2, it is possible to control the clutch capacity with a lever operation by the occupant. That is, in the manual mode M2, it is possible to disconnect the clutch device 40 with the lever operation by the occupant. The auto-mode M1 and the manual mode M2 are mutually switchable. Such mode switching is conducted, for example, by operating the clutch control mode changeover switch 49 (see FIG. 12) while the motorcycle 1 is stopped and the transmission 25 is in neutral. Note that the transmission system 100 may include an indicator indicating a manual state at the time of transitioning to the manual system M2A (the manual mode M2 or the manual intervention mode M3).

In the manual mode M2, the clutch control is basically conducted manually. In the manual mode M2, the clutch capacity is controllable in accordance with an actuation angle of the clutch lever (that is, an actuation angle of the driven clutch lever 58). This enables control of connection and disconnection of the clutch device 40 in accordance with an intention of the occupant. Hereinafter, the actuation angle of the driven clutch lever 58 will be referred to as a driven clutch lever actuation angle.

In the auto-mode M1, the clutch actuator 60 automatically connects and disconnects the clutch device 40. In the auto-mode M1, by performing the manual clutch operation on the clutch lever, it becomes possible to temporarily intervene the manual operation in the automatic control of the clutch device 40 (the manual intervention mode M3).

### <Manual Clutch Operation>

As illustrated in FIG. 2, the clutch lever is coupled through an operation cable to the driven clutch lever 58, which is attached to the release shaft 53 of the clutch device 40. The driven clutch lever 58 is integrally and rotatably attached to an upper end portion of the release shaft 53.

In addition, for example, the clutch control mode changeover switch 49 is provided on a handlebar switch attached to a steering handlebar. This enables the occupant to easily switch the clutch control mode during normal driving.

### <2 Motor Control>

In one embodiment, the pair of motors 61 in the clutch actuator 60 may be constituted to cooperate with each other to drive the release shaft 53 (to connect and disconnect the clutch device 40). In this case, the weight (load) shared by each of the two motors 61 is halved, so that each motor 61 can be downsized. This increases the degree of freedom in the layout of the motors 61, as compared with a constitution in which the clutch actuator 60 includes a single motor 61. Therefore, also in a case where the clutch actuator 60 is disposed on an outside portion of the power unit 20, a protrusion to the outside in the vehicle width direction of the clutch actuator 60 is easily suppressed. Therefore, it becomes possible to substantially downsize the clutch actuator 60.

In one embodiment, in the clutch actuator 60, during normal time (at the time of non-failure), one of the plurality of (two) motors 61 may be used as a drive source of the release shaft 53, and the remaining one may be used for another purpose. For example, the remaining one motor 61 may be constituted not to be actuated for fail-safe, or may be used as an electric current sensor.

As described heretofore, the clutch cover 30 and the gear case 71 according to the present embodiment include: the support shaft portion 90, which is provided to be coaxial with the release shaft 53, and which mutually supports; and the second fastening portion 96 and the cover-side fastening portion 97, which are fastened to each other in the direction orthogonal to the axial direction. According to this constitution, it becomes possible for the support shaft portion 90 to restrict the relative displacement of the clutch cover 30 and the gear case 71 in the direction that intersects the axial direction, so that the clutch actuator 60 can be firmly fastened to the clutch cover 30 while suppressing an increase in the number of components. Furthermore, in fastening the gear case 71 to the clutch cover 30 with the second fastening portion 96 and the cover-side fastening portion 97, it becomes possible to position the clutch cover 30 and the gear case 71 with the support shaft portion 90 in the direction that intersects the axial direction beforehand, so that the gear case 71 can be easily disposed at a desired position with respect to the clutch cover 30 in the second fastening portion 96 and the cover-side fastening portion 97. Therefore, the assembling performance of the clutch actuator 60 can be improved. As described heretofore, firm fastening of the clutch actuator 60 is enabled with good assembling performance.

The second fastening portion 96 and the cover-side fastening portion 97 are disposed between both ends of the rotation shaft 61a of the motor 61. According to this constitution, it becomes possible to fasten the clutch actuator 60 to the clutch cover 30 in the vicinity of the motor 61 which is a heavy object, so that generation of vibrations of the clutch actuator 60 can be effectively suppressed.

The second fastening portion 96 and the cover-side fastening portion 97 are disposed between the pair of motors 61. According to this constitution, it becomes possible to fasten the clutch actuator 60 to the clutch cover 30 in the vicinity of the motor 61, which is a heavy object, and which easily causes the vibrations of the clutch actuator 60, so that the generation of the vibrations of the clutch actuator 60 can be effectively suppressed.

The support shaft portion 90 has the spigot joint structure that supports the clutch cover 30 and the gear case 71 to be mutually rotatable. According to this constitution, the clutch actuator 60 is rotated about the support shaft portion 90, so that the gear case 71 can be easily disposed at a desired position with respect to the clutch cover 30. Therefore, the assembling performance of the clutch actuator 60 can be improved. Furthermore, the clutch actuator 60 is rotated about the support shaft portion 90 to press the clutch actuator 60 against the clutch cover 30, and then the gear case 71 can be fastened to the clutch cover 30 with the second fastening portion 96 and the cover-side fastening portion 97, so that the clutch actuator 60 can be firmly fastened to the clutch cover 30.

The second fastening portion 96 and the cover-side fastening portion 97 are disposed to be shifted in the axial direction with respect to the support shaft portion 90. According to this constitution, the support shaft portion 90 allows the relative displacement of the clutch cover 30 and the gear case 71 in the axial direction, and the second fastening portion 96 and the cover-side fastening portion 97 fasten the clutch cover 30 and the gear case 71 to each other in the direction orthogonal to the axial direction, so that the clutch cover 30 and the clutch actuator 60 can be fastened to each other in a state in which a gap in the axial direction between the gear case 71 and the clutch cover 30 is eliminated. Therefore, tolerance of the gear case 71 and the clutch cover 30 can be absorbed.

Note that the power unit 20 in one embodiment can be constituted by replacing the clutch cover 30 and the release shaft 53 in a manual clutch type of power unit in which the connection and disconnection operation of the clutch device 40 is not performed with the electric control but is performed by an operation of the driver, and installing the clutch actuator 60 later. Therefore, the clutch actuator 60 is attachable to a power unit of a different model. Therefore, it becomes possible to easily constitute a semi-automatic transmission system 100 (an automatic clutch transmission system) by commonly using the clutch actuator 60 for lots of models.

The release mechanism 51 according to the embodiment is an eccentric cam mechanism, but the release mechanism 51 may be a mechanism including a rack and pinion, a feed screw, or the like. The mechanism for coupling the clutch lever and the driven clutch lever 58 is not limited to the operation cable, and may be a mechanism including a rod, a link, or the like.

The clutch actuator 60 according to the embodiment includes the pair of motors 61, but the clutch actuator 60 may include only one motor.

In the embodiment, the support shaft portion 90 includes: the protrusion portion 91, which has a cylindrical shape, and which is provided on the gear case 71; and the recess portion 92, which is provided in the clutch cover 30, but the present invention is not limited to this constitution. The support shaft portion may include a protrusion portion having a cylindrical shape and provided on the clutch cover, and a recess portion provided in the gear case to receive the protrusion portion of the clutch cover.

Additionally, it is possible to appropriately replace a constituent element in the above-described embodiments with a known constituent element without departing from the gist of the present invention.

### INDUSTRIAL APPLICABILITY

According to the above fastening structure of the clutch actuator, firm fastening of the clutch actuator is enabled with good assembling performance.

### REFERENCE SIGNS LIST

1 Motorcycle (apparatus)
21 Engine (motor)
25 Transmission (output target)
30 Clutch cover
40 Clutch device
53 Release shaft
60 Clutch actuator
61 Motor (electric motor)
61a Rotation shaft
63 Gear train (gear)
71 Gear case (case)
90 Support shaft portion
96 Second fastening portion (fastening portion)
97 Cover-side fastening portion (fastening portion)

## Claims

1. A fastening structure of a clutch actuator, the fastening structure comprising:
a clutch device (40) which connects and disconnects power transmission between a motor (21) of an apparatus (1) and an output target (25);
a clutch cover (30) which covers the clutch device (40); and
a clutch actuator (60) which outputs driving force for actuating the clutch device (40), wherein
the clutch actuator (60) includes:
at least one electric motor (61) provided as a drive source;
a release shaft (53) which extends in a first axial direction, and which receives an input from the at least one electric motor (61), and then rotates;
a gear (63) which decelerates rotational power output from the at least one electric motor (61), and which transmits the rotational power to the release shaft (53); and
a case (71) which accommodates the at least one electric motor (61) and the gear (63), and which supports the release shaft (53) to be rotatable, and
the clutch cover (30) and the case (71) include:
a support shaft portion (90) which is provided to be coaxial with the release shaft (53), and which mutually supports; and
a fastening portion (96, 97) which mutually fastens in a direction orthogonal to the first axial direction.

2. The fastening structure of the clutch actuator according to claim 1, wherein
the fastening portion (96, 97) is disposed between both ends of a rotation shaft (61a) in a second axial direction of the rotation shaft (61a) of the at least one electric motor (61).

3. The fastening structure of the clutch actuator according to claim 1 or 2, wherein
the at least one electric motor (61) includes a first electric motor and a second electric motor, and
the fastening portion (96, 97) is disposed between the first electric motor and the second electric motor.

4. The fastening structure of the clutch actuator according to one of claims 1 to 3, wherein
the support shaft portion (90) has a spigot joint structure which supports the clutch cover (30) and the case (71) to be mutually rotatable.

5. The fastening structure of the clutch actuator according to one of claims 1 to 4, wherein
the fastening portion (96, 97) is disposed to be shifted in the first axial direction with respect to the support shaft portion (90).
